(19) Europäisches Patentamt
European Patent Office
Office européen des brevets

(11) EP 4 379 887 A1

(12) **EUROPEAN PATENT APPLICATION**
published in accordance with Art. 153(4) EPC

(43) Date of publication:
**05.06.2024 Bulletin 2024/23**

(21) Application number: **22848112.3**

(22) Date of filing: **20.06.2022**

(51) International Patent Classification (IPC):
***H01M 10/0567*** *(2010.01)* ***H01M 4/62*** *(2006.01)*
***H01M 4/505*** *(2010.01)* ***H01M 4/525*** *(2010.01)*

(52) Cooperative Patent Classification (CPC):
Y02E 60/10

(86) International application number:
**PCT/CN2022/099749**

(87) International publication number:
**WO 2023/005505 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2021 CN 202110874660**

(71) Applicant: **Shenzhen Capchem Technology Co., Ltd**
**Shenzhen, Guangdong 518118 (CN)**

(72) Inventors:
- **HU, Shiguang**
**Shenzhen, Guangdong 518118 (CN)**
- **QIAN, Yunxian**
**Shenzhen, Guangdong 518118 (CN)**
- **ZHANG, Zhengsheng**
**Shenzhen, Guangdong 518118 (CN)**
- **XIANG, Xiaoxia**
**Shenzhen, Guangdong 518118 (CN)**
- **DENG, Yonghong**
**Shenzhen, Guangdong 518118 (CN)**

(74) Representative: **Herrero & Asociados, S.L.**
**Edificio Aqua - Agustín de Foxá, 4-10**
**28036 Madrid (ES)**

(54) **LITHIUM ION BATTERY**

(57) The application relates to the technical field of electrochemistry, in particular to a lithium ion battery, which comprises a positive electrode, a negative electrode and an electrolyte; the positive electrode comprises a positive electrode active material and a conductive agent, the positive electrode active material is a manganese-containing positive electrode material; the electrolyte comprises a compound represented by the following structural formula 1:

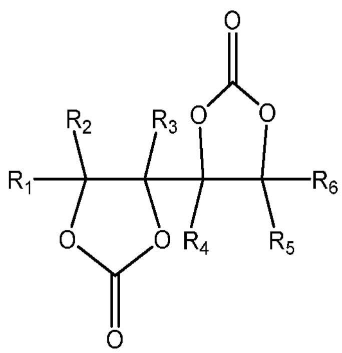

Structural formula 1

The positive electrode active material, the conductive agent and the compound represented by structural formula 1 meet the following condition:

$$0.5 \leq \frac{Dr \times Tr}{w} \leq 16$$

EP 4 379 887 A1

wherein, Dr and Tr are the ratios of the average particle size and specific surface area of the positive electrode active material to the conductive agent, respectively; w is the mass percentage of the compound represented by structural formula 1 in the electrolyte, and the unit is %. According to the application, the compound represented by structural formula 1 is added into the electrolyte, and by adjusting the ratios of specific surface area and particle size of the positive electrode active material to the conductive agent, the structure of the positive electrode material is strengthened through the interface synergistic effect among the three substances, and the interface impedance between the positive electrode material and the electrolyte is weakened, thus reducing the dissolution of manganese, so that the lithium battery has good high-temperature storage performance and high-temperature cycle performance.

## Description

### Technical field

The present application relates to the technical field of electrochemistry, in particular to a lithium ion battery.

### Background

As the main product of the fourth industrial revolution, lithium ion batteries indicate that the world has entered a new era with the theme of new energy. Lithium ion batteries dominates the global secondary battery market with the advantages of high working voltage, wide working range, large specific energy, no pollution and long service life, especially in electric vehicles and other fields in recent years. For lithium ion battery technology, positive electrode material is the decisive factor of lithium ion voltage and capacity, which determines the development prospect of lithium battery capacity.

In the prior art, some new materials, such as spinel lithium manganate, high-nickel cobalt-free and lithium-rich manganese-based materials, are widely used as positive electrode materials for lithium ion battery because of their advantages of wide withstand voltage window and large capacity. However, when these materials are used as positive electrodes of battery, there are certain common problems, for example, the conductivity is poor, the manganese ions are likely to dissolve, the structure of electrode material is likely to collapse. The specific reasons are as follows. From the microstructure point of view, the crystal structure of the above materials has abundant lithium ion transmission channels, and manganese ions are all at the crystal structure points, which plays a vital role in the structural stability of the crystal. In terms of electrochemical performance, it has a wide voltage window and good rate performance under certain conditions. In the cycle process at high temperature, the positive electrode active material has a certain catalytic effect on the electrolyte, which leads to the catalytic oxidation of the electrolyte, which in turn leads to the lack of lattice oxygen and the dissolution of manganese ions, resulting in the collapse of the positive electrode material structure and affecting the battery performance. $Mn^{3+}$ in the positive electrode active material is easy to undergo disproportionation reaction with HF in the electrolyte to generate $Mn^{2+}$ and $Mn^{4+}$, and divalent manganese dissolves, which destroys the positive electrode material structure. During the charging process, $Mn^{2+}$ migrates to the negative electrode, resulting in short circuit due to deposition. When the average valence of manganese in the positive electrode material is lower than +3.5, the crystal structure of the positive electrode material would change from a stable structure to an unstable structure, which would enhance the polarization of electrode and cause problems such as capacity attenuation and poor conductivity.

At present, many researchers have tried to enhance the conductivity of electrode materials by adding conductive agents, and the conductivity has been improved to some extent. For example, carbon coating on the surface of spinel lithium nickel manganate was adopted to enhance the conductivity of electrode materials. Or nano-sized $LiFePO_4$ grains were constructed on the surface of positive electrode material of ferrous lithium phosphate to reduce the diffusion distance of lithium ions in the grains, thus enhancing the diffusion of lithium ions. However, while solving the problem of positive electrode conductivity, a series of problems have also arisen. The addition of conductive agent makes the stability of positive electrode worse, manganese ions are likely to dissolve out, and further weakens the diffusion rate of lithium ions. Meanwhile, the compatibility between positive electrode material and electrolyte becomes worse, which further deteriorates the cycle performance and storage performance of the battery at high temperature. Therefore, in order to give consideration to both the positive electrode conductivity and a series of possible problems, developing a new lithium ion battery is a technical problem that needs to be solved urgently in this field.

### Summary

In order to solve the above problems, the present application provides a lithium ion battery. By adjusting the ratios of specific surface area and particle size of the positive electrode active material to the conductive agent and adding the compound represented by structural formula 1 into the electrolyte, the stability of the positive electrode material can be enhanced while ensuring the improvement of conductivity, and the compatibility between the positive electrode material and the electrolyte can be significantly improved.

A lithium ion battery is provided, including a positive electrode, a negative electrode and an electrolyte, and the positive electrode includes a positive electrode active material and a conductive agent;

the positive electrode active material is a manganese-containing positive electrode material;

the electrolyte includes a compound represented by structural formula 1:

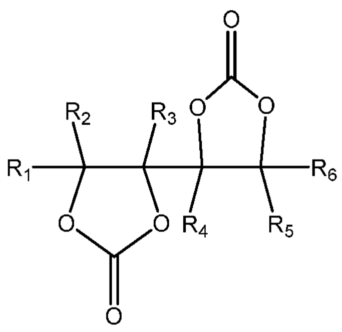

Structural formula 1

wherein Ri, $R_2$, $R_3$, $R_4$, $R_5$ and $R_6$ are each independently selected from one of a hydrogen atom, a fluorine atom or a group containing 1 to 5 carbon atoms;

the positive electrode active material, the conductive agent and the compound represented by structural formula 1 meet the following condition:

$$0.5 \leq \frac{\mathrm{Dr} \times \mathrm{Tr}}{\mathrm{w}} \leq 16$$

wherein Dr is a ratio of an average particle size of the positive electrode active material to an average particle size of the conductive agent; Tr is a ratio of a specific surface area of the positive electrode active material to a specific surface area of the conductive agent; w is a mass percentage of the compound represented by structural formula 1 in the electrolyte, and the unit is %.

According to the lithium ion battery of the present application, by adding the compound represented by structural formula 1 into the electrolyte, adjusting the ratios of specific surface area and particle size of the positive electrode active material to the conductive agent, and controlling the addition amount of the compound represented by structural formula 1, the battery performance can be optimized to the maximum extent. The application makes full use of the relationship between the conductive agent and positive electrode active material, and the strengthening effect of the electrolyte interface, so that the structure of the positive electrode material is more stable while ensuring the conductivity.

Specifically, it is speculated that the compound represented by structural formula 1 is able to decompose on the electrode to form a special film, and the film and the conductive agent with special shape and size could enhance the stability of the positive electrode material through synergistic effect on the interface in the positive electrode active material, so that the conductive agent could build a stable conductive network with the positive electrode active material. Meanwhile, the lithium ion transmission channel is strengthened. The positive electrode material is used in a high-voltage system, and its rich manganese system makes manganese ions particularly easy to dissolve out. In view of this, the compound represented by structural formula 1 forms a barrier of metal ions (lithium ions excluded) between the positive electrode material and the electrolyte, which could complex manganese ions, inhibit the dissolution of manganese ions from the positive electrode and the deposition on the negative electrode, and reduce the side reaction and loss of electrolyte, thus significantly improving the high-temperature cycle performance of battery. The compound represented by structural formula 1 could also weaken the interfacial impedance between the positive electrode material and electrolyte, realize the protection of the positive electrode material and electrode material, and at the same time obviously reduce the gas expansion of battery at high temperature, thus improving the high-temperature storage performance and high-temperature cycle performance of battery.

Preferably, the positive electrode active material, the conductive agent and the compound represented by structural formula 1 meet the following condition:

$$1.0 \leq \frac{\mathrm{Dr} \times \mathrm{Tr}}{\mathrm{w}} \leq 10$$

Preferably, the group containing 1 to 5 carbon atoms is selected from one of a hydrocarbon group, a halogenated hydrocarbon group, an oxygen-containing hydrocarbon group, a silicon-containing hydrocarbon group and a cyano-containing hydrocarbon group.

Preferably, $R_1$, $R_2$, $R_3$, $R_4$, $R_5$ and $R_6$ are each independently selected from one of a hydrogen atom, a fluorine atom, a methyl group, an ethyl group, a trimethylsiloxy group, a cyano group and a trifluoromethyl group.

Preferably, the compound represented by structural formula 1 includes the following compounds:

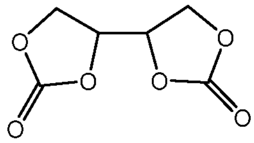
(Compound 1)

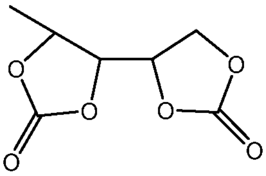
(Compound 2)

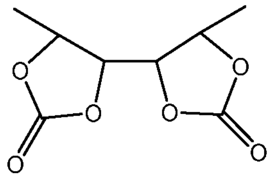
(Compound 3)

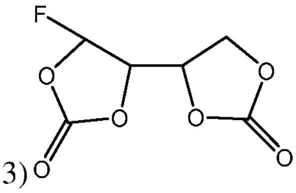
(Compound 4)

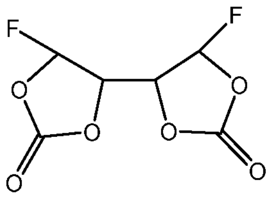
(Compound 5)

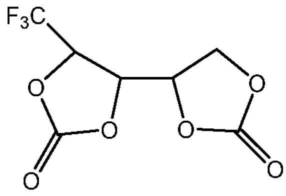
(Compound 6)

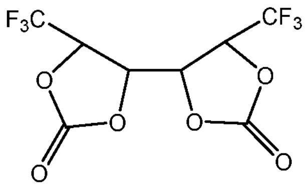
(Compound 7)

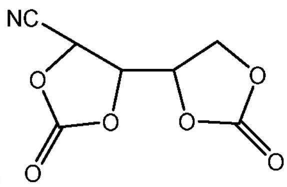
(Compound 8)

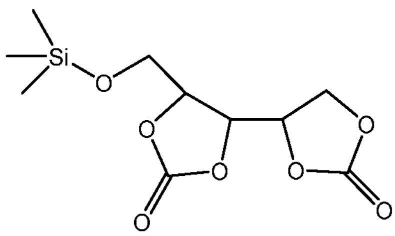
(Compound 9).

Further, the mass percentage w of the compound represented by structural formula 1 in the electrolyte is $0.1\% \leq w\% \leq 5\%$ based on the total mass of the electrolyte being 100%. Preferably, the mass percentage w of the compound represented by structural formula 1 in the electrolyte is $0.1\% \leq w\% \leq 2\%$.

Further, the ratio Dr of the average particle size of the positive electrode active material to the average particle size of the conductive agent meets a condition of $1.3 \leq Dr \leq 3.8$; the ratio Tr of the specific surface area of the positive electrode active material to the specific surface area of the conductive agent meets a condition of $0.25 \leq Tr \leq 1$. Preferably, the ratio Dr of the average particle size of the positive electrode active material to the average particle size of the conductive agent meets a condition of $1.5 \leq Dr \leq 2.5$; the ratio Tr of the specific surface area of the positive electrode active material to the specific surface area of the conductive agent meets a condition of $0.3 \leq Tr \leq 0.8$.

Further, the average particle size of the positive electrode active material is 1-10 μm, and the average particle size of the conductive agent is less than 8 μm. Preferably, the average particle size of the positive electrode active material is 2-7 μm, and the average particle size of the conductive agent is less than 3μm.

Further, the specific surface area of the positive electrode active material is 0.5-1.5 $m^2/g$, and the specific

surface area of the conductive agent is 1.5-20 $m^2/g$.

Further, the positive electrode active material is selected from one or more of the following materials:

spinel $LiMn_2O_4$;
$LiNi_xMn_yO_4$, where $0.5 \leq x < 1$, $1.5 \leq y < 2.0$;
$LiNi_zMn_{1-z}O_2$, where $0.1 \leq z < 1$;
$aLi_2MnO_3 \cdot (1-a)LiMO_2$, where $0 < a \leq 1$, M is selected from one or more of Ni, Co and Mn.

Further, the conductive agent is selected from one or more of acetylene black, Super P, graphene, ketjen black, SFG-6, carbon nanotube and graphdiyne.

Further, the negative electrode includes a negative electrode active material, and the negative electrode active material includes one or more of a carbon-based negative electrode, a silicon-based negative electrode, a tin-based negative electrode and a lithium negative electrode.

Further, the positive electrode conductive agent and the negative electrode conductive agent may be the same or different, and those skilled in the art can choose the appropriate conductive agent material according to the specific needs.

Further, the electrolyte also includes a lithium salt, the lithium salt is selected from at least one of $LiPF_6$, $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiBF_4$, $LiB_{10}Cl_{10}$, $LiAlCl_4$ and LiBETI.

Further, the electrolyte also includes one or more of cyclic sulfate compound, cyclic sulfonate compound and cyclic carbonate compound.

Preferably, the cyclic sulfate compound includes one or more of ethylene sulfate, propylene sulfate or methyl ethylene sulfate. And its mass percentage is 0.01% - 10%, preferably 0.1% - 5.0%.

The cyclic sulfonate compound includes one or more of 1,3-propane sultone (1,3-PS), 1,4-butane sultone (1,4-BS). And its mass percentage is 0.01% - 10%, preferably 0.1% - 5.0%.

The cyclic carbonate compound includes one or more of vinylene carbonate (VC), vinylethylene carbonate (VEC), methylene ethylene carbonate, fluoroethylene carbonate (FEC), trifluoromethyl ethylene carbonate and di-fluoro ethylene carbonate. The mass percentages of methylene ethylene carbonate, VC and VEC are 0.01% - 10%, preferably 0.1% - 5.0%. The mass percentage of FEC, trifluoromethyl ethylene carbonate and di-fluoro ethylene carbonate is 0.01 - 30%, preferably 0.1 - 5%.

Further, the electrolyte also includes a non-aqueous organic solvent, and the non-aqueous organic solvent includes at least one of ethylene carbonate, propene carbonate, butylene carbonate, dimethyl carbonate, diethyl carbonate, ethyl methyl carbonate and methyl propyl carbonate.

Further, the lithium ion battery further includes a separator arranged between the positive electrode and the negative electrode, and the separator may be any existing separator, which is not particularly defined in the present application.

Further, the voltage range of the lithium ion battery is 2.0V - 4.8V.

Compared with the prior art, the application has the following beneficial effects.

According to the lithium ion battery of the present application, by adding the compound represented by structural formula 1 into the electrolyte, adjusting the ratios of specific surface area and particle size of the positive electrode active material to the conductive agent, and controlling the addition amount of the compound represented by structural formula 1, the battery performance can be optimized to the maximum extent. The application makes full use of the relationship between the conductive agent and positive electrode active material, and the strengthening effect of the electrolyte interface, so that the structure of the positive electrode material is more stable while ensuring the conductivity, and the dissolution of manganese is reduced, thereby improving the high-temperature storage performance and high-temperature cycle performance of battery.

**Detailed description of preferred embodiments**

The technical solutions in the embodiments of the present application will be clearly and completely described below with reference to the embodiments of this application. Obviously, the described embodiments are merely part of the embodiments of this application, not all of them. Based on the embodiments in this application, all other embodiments obtained by those of ordinary skill in the art without creative effort belong to the protection scope of this application.

The present application will be further illustrated with the following embodiments.

Table 1

| Compound 1 | Compound 2 | Compound 4 |
|---|---|---|

(continued)

| | | |
|---|---|---|
| 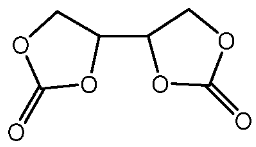 | 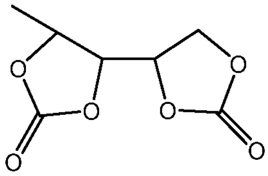 | 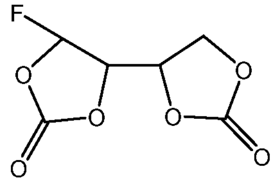 |
| Compound 6 | Compound 8 | Compound 9 |
| 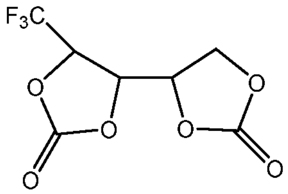 | 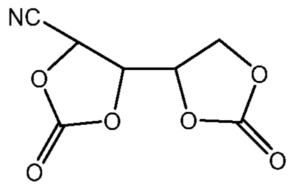 | 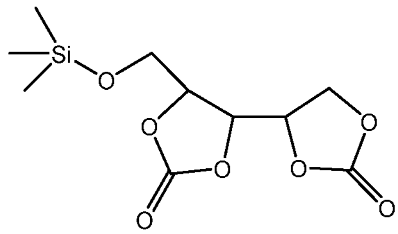 |
| Note: Compounds adopted in the following embodiments and comparative examples are selected from Table 1. | | |

**Embodiment 1**

1. Preparation of Lithium Ion Battery

(1) Preparation of electrolyte

Ethylene carbonate (EC), diethyl carbonate (DEC) and ethyl methyl carbonate (EMC) were mixed according to the mass ratio of EC: DEC: EMC = 1: 1: 1, then lithium hexafluorophosphate ($LiPF_6$) was added until the molar concentration was 1mol/L, and then the compound represented by structural formula 1 was added according to the content of Embodiment 1 shown in Table 1.

(2) Preparation of positive plate

According to the mass ratio of 93:4:3, positive electrode active material $LiNi_{0.5}Mm_{1.5}O_4$, conductive carbon black Super-P and binder polyvinylidene fluoride (PVDF) were mixed, and then the mixture was dispersed in N-methyl-2-pyrrolidone (NMP) to obtain a positive electrode slurry. The slurry was evenly coated on both sides of an aluminum foil, dried, calendered and vacuum-dried, and an aluminum lead wire was welded by an ultrasonic welding machine to obtain a positive electrode plate with a thickness of 120-150$\mu$m.

(3) Preparation of negative plate

According to the mass ratio of 94:1:2.5:2.5, negative electrode active material of artificial graphite, conductive carbon black Super-P, binder styrene-butadiene rubber (SBR) and carboxymethyl cellulose (CMC) were mixed, and then the mixture was dispersed in deionized water to obtain a negative electrode slurry. The slurry was coated on both sides of the copper foil, dried, calendered and vacuum-dried, and a nickel lead wire was welded by an ultrasonic welding machine to obtain a negative electrode plate with a thickness of 120-150$\mu$m.

(4) Preparation of battery core

A three-layer polypropylene microporous diaphragm with a thickness of 20$\mu$m was placed between the positive plate and the negative plate as a separator. And then the sandwich structure composed of the positive plate, the negative plate and the separator was wound. Then the winding body was flattened and put into an aluminum foil packaging bag and baked in vacuum at 75°C for 48 hours to obtain a battery core to be injected with liquid.

(5) Injection and formation of battery core

In a glove box with the dew point controlled below -40°C, the prepared electrolyte was injected into the battery

core, vacuum-packaged and left to set for 24 hours.

The routine formation of first charge for the $LiN_{0.5}Mn_{1.5}O_4$ battery was performed according to the following steps: charged at 0.05C constant current for 180min, charged at 0.2C constant current to 3.85V, and sealed with secondary vacuum, then further charged at 0.2C constant current to 4.4V, left to set at room temperature for 24hr, and discharged at 0.2C constant current to 3.0V.

2. Battery performance tests

(1) High-temperature cycle performance test

The battery was placed in an oven with a constant temperature of 45°C, charged to 4.4V at 1C constant current ($LiNi_{0.5}Mn_{1.5}O_4$/ artificial graphite battery), then charged at a constant voltage until the current dropped to 0.02C, and then discharged to 3.0V at 1C constant current. This step was repeated, and the first discharge capacity and the last discharge capacity were recorded. The capacity retention rate of high temperature cycle is calculated according to the following formula.

$$\text{Capacity retention rate (\%)} = \text{Last discharge capacity / First discharge capacity} \times 100\%.$$

(2) High-temperature storage performance test

After the lithium ion battery was formed, it was charged to 4.4V at 1C constant current/constant voltage at room temperature ($LiNi_{0.5}Mn_{1.5}O_4$/ artificial graphite battery), and the initial discharge capacity and initial battery thickness of the battery were measured. After being stored at 60°C for 30 days, it was discharged to 3.0 V at 1 C, and the retention capacity, recovery capacity and battery thickness after storage were measured. The calculation formulas are as follows.

$$\text{Battery capacity retention rate (\%)} = \text{Retention capacity / Initial capacity} \times 100\%;$$

$$\text{Battery capacity recovery rate (\%)} = \text{Recovery capacity / Initial capacity} \times 100\%;$$

Thickness expansion rate (%) = ( Battery thickness after storage-Initial battery thickness/Initial battery thickness × 100%.

Embodiments 2-16

Embodiments 2-16 are used to illustrate the lithium ion battery, including most of the steps in Embodiment 1, with the difference that
during the preparation of electrolyte, the compound represented by structural formula 1 was added according to the contents shown in Table 1; during the preparation of positive electrode plate, the ratios of specific surface area and particle size of the positive electrode active material to the conductive agent were adjusted according to Table 2. The test result are shown in Table 3.

Comparative examples 1-4

Comparative examples 1-4 are used to illustrate the lithium ion battery disclosed in the present application, including most of the steps in Embodiment 1, with the difference that:
during the preparation of electrolyte, the compound represented by structural formula 1 was added according to the contents shown in Table 1; during the preparation of positive electrode plate, the ratios of specific surface area and particle size of the positive electrode active material to the conductive agent were adjusted according to Table 2. The test result are shown in Table 3.

Table 2 Composition of Lithium Ion Batteries in Embodiments 1-16 and Comparative Examples 1-4

| Group | Positive electrode active material | Positive electrode conductive agent material | Ratio Dr of average particle size | Ratio Tr of specific surface area | Compound represented by structural formula 1 and its content w% | | $\frac{Dr \times Tr}{w}$ |
|---|---|---|---|---|---|---|---|
| Embodiment 1 | $LiNi_{0.5}Mn_{1.5}O_4$ | Super-p | 2.5 | 1.0 | Compound 1 | 5.0 | 0.50 |
| Embodiment 2 | $LiNi_{0.5}Mn_{1.5}O_4$ | Super-p | 1.3 | 0.7 | Compound 1 | 1.5 | 0.61 |
| Embodiment 3 | $LiNi_{0.5}Mn_{1.5}O_4$ | Super-p | 2.0 | 0.5 | Compound 1 | 1.0 | 1.00 |
| Embodiment 4 | $LiNi_{0.5}Mn_{1.5}O_4$ | Super-p | 3.0 | 0.4 | Compound 1 | 0.8 | 1.50 |
| Embodiment 5 | $LiNi_{0.5}Mn_{1.5}O_4$ | Super-p | 3.8 | 0.8 | Compound 1 | 2.0 | 1.52 |
| Embodiment 6 | $LiNi_{0.5}Mn_{1.5}O_4$ | Super-p | 3.2 | 0.8 | Compound 1 | 1.5 | 1.71 |
| Embodiment 7 | $LiNi_{0.5}Mn_{1.5}O_4$ | Super-p | 2.4 | 0.8 | Compound 1 | 1.0 | 1.92 |
| Embodiment 8 | $LiNi_{0.5}Mn_{1.5}O_4$ | Super-p | 2.6 | 0.25 | Compound 1 | 0.3 | 2.17 |
| Embodiment 9 | $LiNi_{0.5}Mn_{1.5}O_4$ | Super-p | 2.8 | 0.7 | Compound 1 | 0.7 | 2.80 |
| Embodiment 10 | $LiNi_{0.5}Mn_{1.5}O_4$ | Super-p | 2.6 | 0.9 | Compound 1 | 0.6 | 3.90 |
| Embodiment 11 | $LiNi_{0.5}Mn_{1.5}O_4$ | Super-p | 2.8 | 0.8 | Compound 1 | 0.4 | 5.60 |
| Embodiment 12 | $LiNi_{0.5}Mn_{1.5}O_4$ | Super-p | 3.6 | 0.9 | Compound 1 | 0.5 | 6.48 |
| Embodiment 13 | $LiNi_{0.5}Mn_{1.5}O_4$ | Super-p | 2.8 | 0.6 | Compound 1 | 0.2 | 8.40 |
| Embodiment 14 | $LiNi_{0.5}Mn_{1.5}O_4$ | Super-p | 3.8 | 0.6 | Compound 1 | 0.2 | 11.40 |
| Embodiment 15 | $LiNi_{0.5}Mn_{1.5}O_4$ | Super-p | 3.5 | 0.8 | Compound 1 | 0.2 | 14 |
| Embodiment 16 | $LiNi_{0.5}Mn_{1.5}O_4$ | Super-p | 2.0 | 0.8 | Compound 1 | 0.1 | 16 |
| Comparative example 1 | $LiNi_{0.5}Mn_{1.5}O_4$ | Super-p | 1.3 | 0.3 | Compound 1 | 1.0 | 0.39 |
| Comparative example 2 | $LiNi_{0.5}Mn_{1.5}O_4$ | Super-p | 3.8 | 0.9 | Compound 1 | 0.2 | 17.10 |

(continued)

| Group | Positive electrode active material | Positive electrode conductive agent material | Ratio Dr of average particle size | Ratio Tr of specific surface area | Compound represented by structural formula 1 and its content w% | | $\frac{Dr \times Tr}{w}$ |
|---|---|---|---|---|---|---|---|
| Comparative example 3 | $LiNi_{0.5}Mn_{1.5}O_4$ | Super-p | 2.0 | 1.0 | Compound 1 | 0.1 | 20 |
| Comparative example 4 | $LiNi_{0.5}Mn_{1.5}O_4$ | Super-p | 2.8 | 0.8 | Compound 1 | 0.1 | 22.4 |

Table 3 Electrochemical Performance Test Results of Lithium Ion Batteries in Embodiments 1-16 and Comparative Examples 1-4

| Group | Capacity retention rate after 500 cycles at 45°C 1C (%) | After storage at 60°C for 30 days | | | Content of Mn in electrolyte (ppm) |
|---|---|---|---|---|---|
| | | Capacity retention rate (%) | Capacity recovery rate (%) | Thickness expansion rate (%) | |
| Embodiment 1 | 81.8 | 82.6 | 83.1 | 13.5 | 362 |
| Embodiment 2 | 81.2 | 81.4 | 83.6 | 12.9 | 357 |
| Embodiment 3 | 84.4 | 84.9 | 86.6 | 11.2 | 328 |
| Embodiment 4 | 83.6 | 84.1 | 86.7 | 11.5 | 332 |
| Embodiment 5 | 83.5 | 83.8 | 86.3 | 12.4 | 338 |
| Embodiment 6 | 83.1 | 82.6 | 85.2 | 11.3 | 346 |
| Embodiment 7 | 84.1 | 83.8 | 86.2 | 10.8 | 331 |
| Embodiment 8 | 83.3 | 83.8 | 85.2 | 11.2 | 334 |
| Embodiment 9 | 83.1 | 82.7 | 84.7 | 11.4 | 339 |
| Embodiment 10 | 83.2 | 83.0 | 85.6 | 10.8 | 331 |
| Embodiment 11 | 84.3 | 84.6 | 87.2 | 10.6 | 326 |
| Embodiment 12 | 82.3 | 82.4 | 85.2 | 11.2 | 352 |
| Embodiment 13 | 83.8 | 84.3 | 86.5 | 10.3 | 329 |
| Embodiment 14 | 81.3 | 81.3 | 83.6 | 12.0 | 351 |
| Embodiment 15 | 80.1 | 81.2 | 83.8 | 12.4 | 358 |
| Embodiment 16 | 80.6 | 80.9 | 83.8 | 12.1 | 369 |
| Comparative example 1 | 71.4 | 72.6 | 75.8 | 26.8 | 698 |
| Comparative example 2 | 72.5 | 71.8 | 73.9 | 28.4 | 701 |
| Comparative example 3 | 68.9 | 69.3 | 71.2 | 29.6 | 725 |
| Comparative example 4 | 70.3 | 71.3 | 73.9 | 28.2 | 720 |

From Embodiments 1-16 and Comparative examples 1-4, it can be seen that when the compound represented by structural formula 1 is added to the electrolyte, and the ratios of average particle size and specific surface area of the positive electrode active material to the conductive agent are adjusted, so that the ratios and the addition amount of the compound represented by structural formula 1 meet the condition of $0.5 \leq \frac{Dr \times Tr}{w} \leq 16$. In this way, the stability

of the positive electrode material could be enhanced on the basis of ensuring the improvement of conductivity, and the compatibility between the positive electrode material and the electrolyte could be significantly improved. With the addition of the compound represented by structural formula 1, a barrier of metal ion is constructed between the electrolyte and the positive electrode material, which can obviously ameliorate the problem of manganese ion dissolution, and further significantly improve the high-temperature cycle performance and high-temperature storage performance of battery. Preferably, when the condition of $1\leq \frac{Dr\times Tr}{w} \leq 10$ is met, a better performance is obtained. The reason may be that the thickness of the special film formed by the compound represented by structural formula 1 on the positive electrode is moderate, and the synergistic effect between the compound and the conductive agent in the positive electrode active material is the best.

Embodiments 17-21

Embodiments 17-21 are used to illustrate the lithium ion battery, including most of the steps in Embodiment 1, with the difference that:
during the preparation of electrolyte, the compound represented by structural formula 1 was added with different contents according to Embodiments 17-21 in Table 4. The test result are shown in Table 5.

Table 4 Composition of Lithium Ion Batteries in Embodiments 3 and 17-21

| Group | Positive electrode active material | Positive electrode conductive agent material | Ratio Dr of average | Ratio Tr of specific surface area | Compound represented by structural formula 1 and its content w% | | $\frac{Dr \times Tr}{w}$ |
|---|---|---|---|---|---|---|---|
| Embodiment 3 | $LiNi_{0.5}Mn_{1.5}O_4$ | Super-p | 2.0 | 0.5 | Compound 1 | 1.0 | 1.0 |
| Embodiment 17 | $LiNi_{0.5}Mn_{1.5}O_4$ | Super-p | 2.0 | 0.5 | Compound 2 | 1.0 | 1.0 |
| Embodiment 18 | $LiNi_{0.5}Mn_{1.5}O_4$ | Super-p | 2.0 | 0.5 | Compound 4 | 1.0 | 1.0 |
| Embodiment 19 | $LiNi_{0.5}Mn_{1.5}O_4$ | Super-p | 2.0 | 0.5 | Compound 6 | 1.0 | 1.0 |
| Embodiment 20 | $LiNi_{0.5}Mn_{1.5}O_4$ | Super-p | 2.0 | 0.5 | Compound 8 | 1.0 | 1.0 |
| Embodiment 21 | $LiNi_{0.5}Mn_{1.5}O_4$ | Super-p | 2.0 | 0.5 | Compound 9 | 1.0 | 1.0 |

Table 5 Test Results of Electrochemical Performance of Lithium Ion Batteries in Embodiments 3 and 17-21

| Group | Capacity retention rate after 500 cycles at 45°C 1C (%) | After storage at 60°C for 30 days | | | Content of Mn in electrolyte (ppm) |
|---|---|---|---|---|---|
| | | Capacity retention rate (%) | Capacity recovery rate (%) | Thickness expansion rate (%) | |
| Embodiment 3 | 84.4 | 84.9 | 86.6 | 11.2 | 328 |
| Embodiment 17 | 84.2 | 85.1 | 87.6 | 11.3 | 328 |
| Embodiment 18 | 83.2 | 83.5 | 87.9 | 10.1 | 320 |
| Embodiment 19 | 83.5 | 85.6 | 87.2 | 9.6 | 314 |

(continued)

| Group | Capacity retention rate after 500 cycles at 45°C 1C (%) | After storage at 60°C for 30 days | | | Content of Mn in electrolyte (ppm) |
|---|---|---|---|---|---|
| | | Capacity retention rate (%) | Capacity recovery rate (%) | Thickness expansion rate (%) | |
| Embodiment 20 | 82.6 | 82.1 | 86.4 | 11.7 | 346 |
| Embodiment 21 | 83.1 | 84.2 | 87.5 | 10.9 | 331 |

Embodiments 22-25

Embodiments 22-25 are used to illustrate the lithium ion battery, including most of the steps in Embodiment 1, with the difference that:
during the preparation of the positive electrode, the positive electrode active materials were added according to Embodiments 22-25 shown in Table 6. The test result are shown in Table 7.

Table 6 Composition of Lithium Ion Batteries in Embodiments 3 and 22-25

| Group | Positive electrode active material | Positive electrode conductive agent material | Ratio Dr of average particle size | Ratio Tr of specific surface area | Compound represented by structural formula 1 and its content w% | | Other compounds and contents % | $\frac{Dr \times Tr}{w}$ |
|---|---|---|---|---|---|---|---|---|
| Embodiment 3 | $LiNi_{0.5}Mn_{1.5}O_4$ | Super-p | 2.0 | 0.5 | Compound 1 | 1.0 | | 1.0 |
| Embodiment 22 | $LiNi_{0.5}Mn_{1.5}O_4$ | Super-p | 2.0 | 0.5 | Compound 1 | 1.0 | VC: 1 | 1.0 |
| Embodiment 23 | $LiNi_{0.5}Mn_{1.5}O_4$ | Super-p | 2.0 | 0.5 | Compound 1 | 1.0 | FEC: 1 | 1.0 |
| Embodiment 24 | $LiNi_{0.5}Mn_{1.5}O_4$ | Super-p | 2.0 | 0.5 | Compound 1 | 1.0 | PS: 1 | 1.0 |
| Embodiment 25 | $LiNi_{0.5}Mn_{1.5}O_4$ | Super-p | 2.0 | 0.5 | Compound 1 | 1.0 | DTD: 1 | 1.0 |

Table 7 Test Results of Electrochemical Performance of Lithium Ion Batteries in Embodiments 3 and 22-25

| Group | Capacity retention rate after 500 cycles at 45°C 1C (%) | After storage at 60°C for 30 days | | | Content of Mn in electrolyte (ppm) |
|---|---|---|---|---|---|
| | | Capacity retention rate (%) | Capacity recovery rate (%) | Thickness expansion rate (%) | |
| Embodiment 3 | 84.4 | 84.9 | 86.6 | 11.2 | 328 |
| Embodiment 22 | 86.7 | 87.5 | 89.7 | 8.6 | 289 |
| Embodiment 23 | 85.9 | 87.8 | 90.1 | 7.9 | 278 |
| Embodiment 24 | 85.2 | 87.1 | 89.2 | 8.4 | 283 |
| Embodiment 25 | 86.9 | 88.1 | 90.8 | 7.6 | 265 |

From the test results, it can be seen that the compound represented by structural formula 1 could further improve the high-temperature performance of lithium ion batteries when used in combination with conventional vinylene carbonate

(VC), fluoroethylene carbonate (FEC), ethylene sulfate (DTD) and 1,3- propane sultone (PS).

Embodiments 26-34

Embodiments 26-34 are used to illustrate the lithium ion battery, including most of the steps in Embodiment 1, with the difference that
during the preparation of the positive electrode, the positive electrode active materials and additives were added according to Embodiments 26-34 shown in Table 8. The test result are shown in Table 9.

Comparative examples 5-10

Comparative examples 5-10 are used to illustrate the lithium ion battery disclosed in the present application, including most of the steps in Embodiment 1, with the difference that:
during the preparation of electrolyte, the substances were added according to Table 8. The test result are shown in Table 9.

Table 8 Composition of Lithium Ion Batteries in Embodiments 26-34 and Comparative Examples 5-10

| Group | Positive electrode active material | Positive electrode conductive agent material | Ratio Dr of average particle size | Ratio Tr of specific surface area | Compound represented by structural formula 1 and its content w | | $\frac{Dr \times Tr}{w}$ |
|---|---|---|---|---|---|---|---|
| Embodiment 26 | $LiNi_{0.4}Mn_{0.6}O_2$ | Super-p | 2.0 | 0.5 | Compound 1 | 1.0 | 1.0 |
| Embodiment 27 | $LiNi_{0.4}Mn_{0.6}O_2$ | Super-p | 2.4 | 0.8 | Compound 1 | 1.0 | 1.92 |
| Embodiment 28 | $LiNi_{0.4}Mn_{0.6}O_2$ | Super-p | 2.8 | 0.7 | Compound 1 | 0.7 | 2.80 |
| Embodiment 29 | $0.4Li_2MnO_3 \cdot 0.6LiMnO_2$ | Super-p | 2.0 | 0.5 | Compound 1 | 1.0 | 1.0 |
| Embodiment 30 | $0.4Li_2MnO_3 \cdot 0.6LiMnO_2$ | Super-p | 2.4 | 0.8 | Compound 1 | 1.0 | 1.92 |
| Embodiment 31 | $0.4Li_2MnO_3 \cdot 0.6LiMnO_2$ | Super-p | 2.8 | 0.7 | Compound 1 | 0.7 | 2.80 |
| Embodiment 32 | Spinel $LiMn_2O_4$ | Super-p | 2.0 | 0.5 | Compound 1 | 1.0 | 1.0 |
| Embodiment 33 | Spinel $LiMn_2O_4$ | Super-p | 2.4 | 0.8 | Compound 1 | 1.0 | 1.92 |
| Embodiment 34 | Spinel $LiMn_2O_4$ | Super-p | 2.8 | 0.7 | Compound 1 | 0.7 | 2.80 |
| Comparative example 5 | $LiNi_{0.4}Mn_{0.6}O_2$ | Super-p | 1.3 | 0.3 | Compound 1 | 1.0 | 0.39 |
| Comparative example 6 | $LiNi_{0.4}Mn_{0.6}O_2$ | Super-p | 3.8 | 0.9 | Compound 1 | 0.2 | 17.10 |

(continued)

| Group | Positive electrode active material | Positive electrode conductive agent material | Ratio Dr of average particle size | Ratio Tr of specific surface area | Compound represented by structural formula 1 and its content w | | $\frac{Dr \times Tr}{w}$ |
|---|---|---|---|---|---|---|---|
| Comparative example 7 | $0.4Li_2MnO_3 \cdot 0.6LiMnO_2$ | Super-p | 1.3 | 0.3 | Compound 1 | 1.0 | 0.39 |
| Comparative example 8 | $0.4Li_2MnO_3 \cdot 0.6LiMnO_2$ | Super-p | 3.8 | 0.9 | Compound 1 | 0.2 | 17.10 |
| Comparative example 9 | Spinel $LiMn_2O_4$ | Super-p | 1.3 | 0.3 | Compound 1 | 1.0 | 0.39 |
| Comparative example 10 | Spinel $LiMn_2O_4$ | Super-p | 3.8 | 0.9 | Compound 1 | 0.2 | 17.10 |

Table 9 Electrochemical Performance Test Results of Lithium Ion Batteries in Embodiments 26-34 and Comparative Examples 5-10

| Group | Capacity retention rate after 500 cycles at 45°C 1C (%) | After storage at 60°C for 30 days | | | Content of Mn in electrolyte (ppm) |
|---|---|---|---|---|---|
| | | Capacity retention rate (%) | Capacity recovery rate (%) | Thickness expansion rate (%) | |
| Embodiment 26 | 84.8 | 85.9 | 86.8 | 11.5 | 331 |
| Embodiment 27 | 84.0 | 85.1 | 86.3 | 11.8 | 335 |
| Embodiment 28 | 83.9 | 84.5 | 85.7 | 12.1 | 341 |
| Embodiment 29 | 84.7 | 85.4 | 87.4 | 10.6 | 323 |
| Embodiment 30 | 84.0 | 84.7 | 86.6 | 11.5 | 334 |
| Embodiment 31 | 83.2 | 83.8 | 86.5 | 12.9 | 348 |
| Embodiment 32 | 82.5 | 84.6 | 88.4 | 12.3 | 342 |
| Embodiment 33 | 81.6 | 83.4 | 87.2 | 13.1 | 350 |
| Embodiment 34 | 82.6 | 84.9 | 86.2 | 12.6 | 348 |
| Comparative example 5 | 71.7 | 72.9 | 75.8 | 27.8 | 696 |
| Comparative example 6 | 71.6 | 72.8 | 75.9 | 28.4 | 700 |
| Comparative example 7 | 69.9 | 71.2 | 74.2 | 29.6 | 724 |
| Comparative example 8 | 70.3 | 71.3 | 73.9 | 29.8 | 722 |
| Comparative example 9 | 68.7 | 69.3 | 72.2 | 28.6 | 735 |
| Comparative example 10 | 68.3 | 69.7 | 72.9 | 28.4 | 737 |

According to the test results, for the lithium ion battery provided by the application, with the addition of the compound represented by the structural formula 1 to the electrolyte, and the adjustment of the ratios of average particle size and specific surface area of the positive electrode active material to the conductive agent, the compound has good coordination effect with different manganese-containing positive electrode active materials. Simply by adjusting the relationship among the ratios of average particle size and specific surface area of the positive electrode active material

to the conductive agent and the content of the compound represented by structural formula 1, the dissolution of Mn ions can be effectively suppressed, thus improving the high-temperature cycle performance and high-temperature storage performance of lithium ion batteries.

To sum up, for the lithium ion battery provided by the application, while adjusting the ratios of average particle size and specific surface area of the positive electrode active material to the conductive agent, a specific content of the compound represented by structural formula 1 is added to the electrolyte, and when the condition of 0.5 $0.5 \le \frac{Dr \times Tr}{w} \le 16$ is met, the structure of the positive electrode material is strengthened through the interface synergistic effect between the compound represented by structural formula 1, the added conductive agent and the positive electrode material. Meanwhile, the interfacial impedance between the positive electrode material and the electrolyte is weakened, thus the lithium ion mobility is effectively improved. Therefore, the lithium battery has good rate performance, high-temperature storage performance and high-temperature cycle performance without deteriorating the battery conductivity.

The application has been further described with the above specific embodiments, but it should be understood that the specific description here should not be construed as limiting the essence and scope of the application. Various modifications made to the above embodiments by those skilled in the art after referring to this specification belong to the protection scope of this application.

## Claims

1. A lithium ion battery, comprising a positive electrode, a negative electrode and an electrolyte, wherein the positive electrode comprises a positive electrode active material and a conductive agent;

    the positive electrode active material is a manganese-containing positive electrode material;
    the electrolyte comprises a compound represented by structural formula 1:

    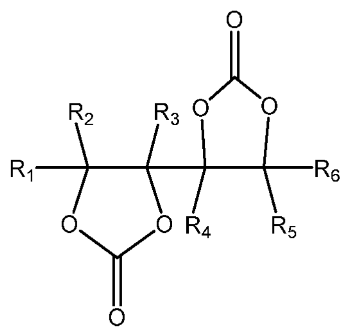

    Structural formula 1

    wherein $R_1$, $R_2$, $R_3$, $R_4$, $R_5$ and $R_6$ are each independently selected from one of a hydrogen atom, a fluorine atom or a group containing 1 to 5 carbon atoms;
    the positive electrode active material, the conductive agent and the compound represented by structural formula 1 meet the following condition:

    $$0.5 \le \frac{Dr \times Tr}{w} \le 16$$

    wherein Dr is a ratio of an average particle size of the positive electrode active material to an average particle size of the conductive agent; Tr is a ratio of a specific surface area of the positive electrode active material to a specific surface area of the conductive agent; w is a mass percentage of the compound represented by structural formula 1 in the electrolyte, and the unit is %.

2. The lithium ion battery of claim 1, wherein the mass percentage w of the compound represented by structural formula 1 in the electrolyte is 0.1%≤w%≤5% based on the total mass of the electrolyte being 100%.

3. The lithium ion battery of claim 1, wherein the ratio Dr of the average particle size of the positive electrode active material to the average particle size of the conductive agent meets a condition of $1.3 \leq Dr \leq 3.8$; the ratio Tr of the specific surface area of the positive electrode active material to the specific surface area of the conductive agent meets a condition of $0.25 \leq Tr \leq 1$.

4. The lithium ion battery of claim 3, wherein the ratio Dr of the average particle size of the positive electrode active material to the average particle size of the conductive agent meets a condition of $1.5 \leq Dr \leq 2.5$; the ratio Tr of the specific surface area of the positive electrode active material to the specific surface area of the conductive agent meets a condition of $0.3 \leq Tr \leq 0.8$.

5. The lithium ion battery of claim 1, wherein the compound represented by structural formula 1 comprises the following compounds:

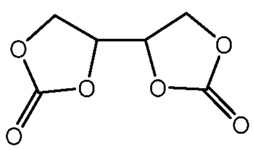 (Compound 1) 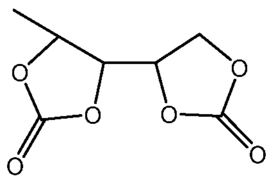 (Compound 2)

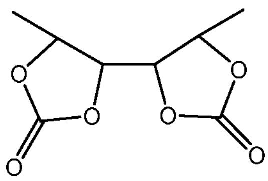 (Compound 3) 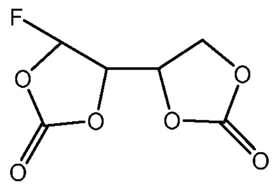 (Compound 4)

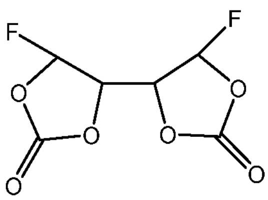 (Compound 5) 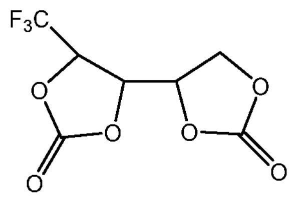 (Compound 6)

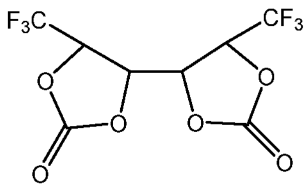 (Compound 7) 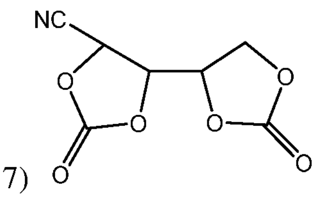 (Compound 8)

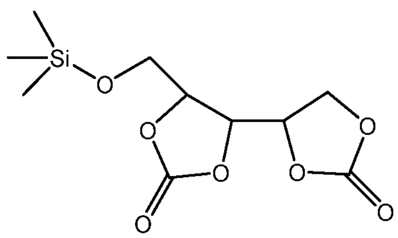 (Compound 9).

6. The lithium ion battery of claim 1, wherein the positive electrode active material is selected from one or more of the following materials:

spinel $LiMn_2O_4$;

$LiNi_xMn_yO_4$, where $0.5<x<1$, $1.5\leq y<2.0$;
$LiNi_zMn_{1-z}O_2$, where $0.1\leq z<1$;
$aLi_2MnO_3\cdot(1-a)LiMO_2$, where $0<a\leq 1$, M is selected from one or more of Ni, Co and Mn.

**7.** The lithium ion battery of claim 1, wherein the conductive agent is selected from one or more of acetylene black, Super P, graphene, ketjen black, SFG-6, carbon nanotube and graphdiyne.

**8.** The lithium ion battery of claim 1, wherein the electrolyte further comprises a lithium salt, the lithium salt is selected from at least one of $LiPF_6$, $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiBF_4$, $LiB_{10}Cl_{10}$, $LiAlCl_4$ and LiBETI.

**9.** The lithium ion battery of claim 1, wherein the electrolyte further comprises one or more of cyclic sulfate compound, cyclic sulfonate compound and cyclic carbonate compound;

the cyclic sulfate compound comprises one or more of ethylene sulfate, propylene sulfate or methyl ethylene sulfate;
the cyclic sulfonate compound comprises one or more of 1,3-propane sultone, 1,4-butane sultone, and 1,3-propene sultone;
the cyclic carbonate compound comprises one or more of vinylene carbonate, vinylethylene carbonate, methylene ethylene carbonate, fluoroethylene carbonate, trifluoromethyl ethylene carbonate and di-fluoro ethylene carbonate.

**10.** The lithium ion battery of claim 1, wherein the electrolyte further comprises a non-aqueous organic solvent, and the non-aqueous organic solvent comprises at least one of ethylene carbonate, propene carbonate, butylene carbonate, dimethyl carbonate, diethyl carbonate, ethyl methyl carbonate and methyl propyl carbonate.

## INTERNATIONAL SEARCH REPORT

International application No.
**PCT/CN2022/099749**

**A. CLASSIFICATION OF SUBJECT MATTER**

H01M 10/0567(2010.01)i；H01M 4/62(2006.01)i；H01M 4/505(2010.01)i；H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNABS, ENTXT, ENTXTC, CNKI, VEN: 导电碳, +黑, 正极, 锰, 锂, 粒度, 粒径, 比表面, BET, conductive, carbon, black, positive, cathode, lithium, magazine, size, specific area

**C. DOCUMENTS CONSIDERED TO BE RELEVANT**

| Category* | Citation of document, with indication, where appropriate, of the relevant passages | Relevant to claim No. |
|---|---|---|
| PX | CN 113611911 A (SHENZHEN CAPCHEM TECHNOLOGY CO., LTD.) 05 November 2021 (2021-11-05)<br>description, paragraphs 2-114 | 1-10 |
| A | CN 109994776 A (SHENZHEN CAPCHEM TECHNOLOGY CO., LTD.) 09 July 2019 (2019-07-09)<br>entire document | 1-10 |
| A | JP 2013025887 A (MITSUBISHI CHEMICAL CORPORATION) 04 February 2013 (2013-02-04)<br>entire document | 1-10 |
| A | JP 2019114396 A (TOYO INK SC HOLDINGS CO., LTD.) 11 July 2019 (2019-07-11)<br>entire document | 1-10 |
| A | CN 101110473 A (NISSAN MOTOR CO., LTD.) 23 January 2008 (2008-01-23)<br>entire document | 1-10 |

☐ Further documents are listed in the continuation of Box C.　　☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 August 2022** | **02 September 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/099749**

| Patent document cited in search report | | | Publication date (day/month/year) | Patent family member(s) | | | Publication date (day/month/year) |
|---|---|---|---|---|---|---|---|
| CN | 113611911 | A | 05 November 2021 | None | | | |
| CN | 109994776 | A | 09 July 2019 | WO | 2019128160 | A1 | 04 July 2019 |
| | | | | CN | 109994776 | B | 03 May 2022 |
| JP | 2013025887 | A | 04 February 2013 | None | | | |
| JP | 2019114396 | A | 11 July 2019 | JP | 6992490 | B2 | 13 January 2022 |
| CN | 101110473 | A | 23 January 2008 | EP | 1881546 | A2 | 23 January 2008 |
| | | | | KR | 20080008247 | A | 23 January 2008 |
| | | | | US | 2008020280 | A1 | 24 January 2008 |
| | | | | JP | 2008047512 | A | 28 February 2008 |
| | | | | EP | 1881546 | A3 | 18 March 2009 |

Form PCT/ISA/210 (patent family annex) (January 2015)